(19) Europäisches Patentamt
European Patent Office
Office européen des brevets

(11) Veröffentlichungsnummer: **0 173 178**
**B1**

(12) # EUROPÄISCHE PATENTSCHRIFT

(45) Veröffentlichungstag der Patentschrift: **20.04.88**

(51) Int. Cl.⁴: **C 09 B 45/16**, D 06 P 1/10

(21) Anmeldenummer: **85110240.0**

(22) Anmeldetag: **16.08.85**

(54) **Unsymmetrische 1:2-Chromkomplexfarbstoffe.**

(30) Priorität: **28.08.84 DE 3431518**

(43) Veröffentlichungstag der Anmeldung: **05.03.86 Patentblatt 86/10**

(45) Bekanntmachung des Hinweises auf die Patenterteilung: **20.04.88 Patentblatt 88/16**

(84) Benannte Vertragsstaaten: **CH DE FR GB LI**

(56) Entgegenhaltungen:
**DE - A - 2 225 447**
**DE - A - 2 345 358**
**FR - A - 2 336 454**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Mennicke, Winfried, Dr., Steglitzer Strasse 8, D-5090 Leverkusen (DE)**

**EP 0 173 178 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung sind unsymmetrische Sulfonsäuregruppen enthaltend 1:2-Chromkomplexfarbstoffe der Formel I

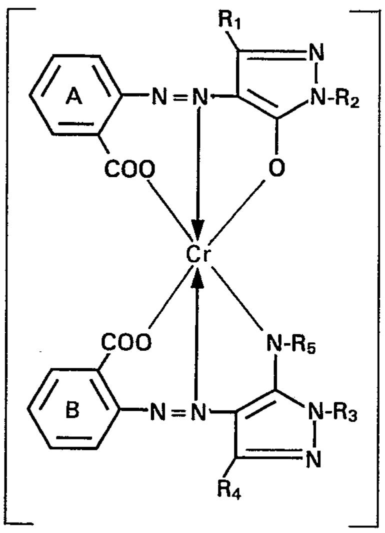

$(1 + m)^{(-)}$

$(1 + m)\ Me^{(+)}$

I

worin unabhängig voneinander

$R_1$ = Alkyl, Aryl, COOH, CO-$NH_2$, CN, CO-O-Alkyl oder CO-O-Aryl,

$R_2$, $R_3$ = H, Alkyl, Aralkyl oder Aryl,

$R_4$ = H, Alkyl oder Aryl,

$R_5$ = H, Alkyl, Aryl oder Arylsulfonyl und

$Me^{(+)}$ = Kation sind,

m = 1-3 ist und der Zahl der Sulfogruppen entspricht,

wobei die Ringe A und B sowie die genannten Alkyl- und Arylgruppen weitere Substituenten tragen können.

Geeignete Substituenten in den Ringen A und B sind beispielsweise $SO_3H$, Sulfamoyl, COOH, $CH_3$, Acylamino, Cl oder $NO_2$.

Von besonderer Bedeutung sind die sulfogruppenhaltigen Farbstoffe der Formel II

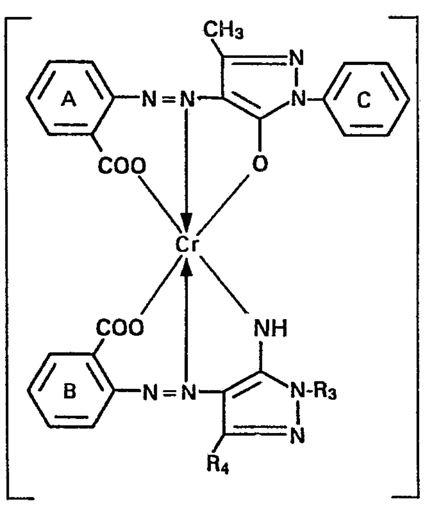

$(1 + m)^{(-)}$

$(1 + m)\ Me^{(+)}$

II

worin die Ringe A und B durch $SO_3H$, $NO_2$, Sulfamoyl oder Cl und der Ring C durch $SO_3$, Cl, Alkyl, Alkoxy, Alkylsulfonyl, Sulfamoyl, Carbamoyl oder $NO_2$ substituiert sein können, und $R_3$, $R_4$, m und $Me^{(+)}$ die obengenannte Bedeutung haben.

Bevorzugte Farbstoffe der Formel II sind solche mit einer Sulfogruppe.

Bevorzugte, im beliebigen Zusammenhang genannte Alkyl- und Alkoxygruppen sind solche mit 1-4 C-Atomen, die gegebenenfalls weiter substituiert sein können, beispielsweise durch CN, Cl, OH, $C_1$-$C_4$-Alkoxy, Phenyl. Besonders bevorzugt sind Methyl bzw. Methoxy.

Bevorzugte, im beliebigen Zusammenhang genannte Arylreste sind insbesondere gegebenenfalls substituierte Phenylreste mit Substituenten wie Halogen, insbesondere Cl und Br, $NO_2$, $C_1$-$C_4$-Alkyl, sowie die unsubstituierte oder durch Sulfogruppen substituierte Naphthylgruppe.

Bevorzugte Acylaminogruppen sind insbesondere $C_1$-$C_4$-Alkylcarbonylamino, $C_1$-$C_4$-Alkoxycarbonylamino, $C_1$-$C_4$-Alkylsulfonylamino.

Die Sulfamoyl- und Carbamoylgruppen können mono- oder disubstituiert sein, beispielsweise durch gegebenenfalls $C_1$-$C_4$-Alkoxy oder OH substituiertes $C_1$-$C_4$-Alkyl oder durch Aryl, insbesondere gegebenenfalls wie oben angegeben substituiertes Phenyl.

$Me^{(+)}$ stellt beispielsweise ein Alkalikation, wie $Li^{(+)}$, $Na^{(+)}$, $K^{(+)}$, $NH_4^{(+)}$ oder das Ammoniumion eines organischen Amins dar.

Die erfindungsgemässen Farbstoffe werden in an sich bekannter Weise erhalten, indem man beispielsweise einen Farbstoff der Formel III oder IV mit einem chromabgebenden Mittel in den 1:1-Chromkomplex überführt und diesen dann mit einem Farbstoff der Formel IV oder III zu einem unsymmetrischen 1:2-Chrommischkomplex der Formel I umsetzt.

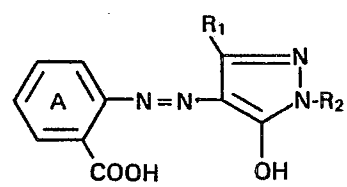

III

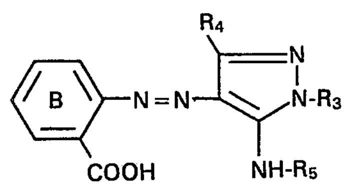

IV

Die Monoazofarbstoffe der Formel III und IV lassen sich durch Kuppeln von diazotierten Aminen der Formel V auf 5-Parazolone der Formel VI und 5-Iminopyrazolone der Formel VII herstellen.

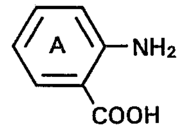

V

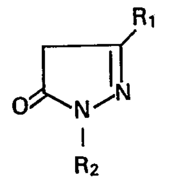

VI

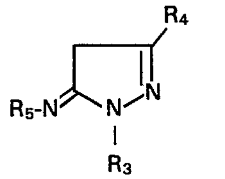

VII

Geeignete Amine der Formel V und geeignete 5-Pyrazolone der Formel VI sind beispielsweise in den Deutschen Offenlegungsschriften 2 313 722 und 3 132 334 beschrieben.

Geeignete 5-Iminopyrazolone der Formel VII sind beispielsweise:

5-Iminopyrazolon,
1-Phenyl-3-methyl-5-tosyliminopyrazolon,
1-Methyl-, 1-Ethyl-, 1-(2-Hydroxyethyl)-, 1-Propyl-, 1-Butyl-, 1-Pentyl-, 1-Benzyl-, 1-Phenyl-, 1-(3-Sulfophenyl)-, 1-(4-Sulfophenyl)- oder 1-(2-Chlorphenyl)-5-iminopyrazolon,
3-Phenyl- oder 3-Methyl-5-iminopyrazolon,
1-Methyl-, 1-Ethyl-, 1-(2-Hydroxyethyl)-, 1-(2-Cyanoethyl)-, 1-(2-Methoxyethyl)-, 1-Pentyl-, 1-Phenyl-, 1-(2-Chlorphenyl)-, 1-(3-Chlorphenyl)-, 1-(4-Chlorphenyl)-, 1-(2,5-Dichlorphenyl)-, 1-(3-Sulfophenyl)-, 1-(4-Sulfophenyl)-, 1-(3-Sulfamoylphenyl)-, 1-(4-Sulfamoylphenyl)- oder 1-(1)-Naphthyl-3-methyl-5-iminopyrazolon.

Zur Herstellung der erfindungsgemässen 1:2-Chrommischkomplexe der Formel I werden vorzugsweise Azofarbstoffe der Formel III in die 1:1-Chromkomplexe überführt. Dies kann beispielsweise in einem sauren Medium mit mindestens einem Moläquivalent eines chromabgebenden Mittels in offener oder geschlossener Apparatur bei der Siedetemperatur des Mediums oder gegebenenfalls bei 100°C übersteigenden Temperaturen erfolgen. Als chromabgebende Mittel können dreiwertige Chromsalze, wie Chromformiat, Chromacetat, Chromfluorid, Chromchlorid oder Chromsulfat, dienen. Der Farbstoff kann in wässrigem Medium gegebenenfalls in Gegenwart eines organischen Lösungsmittels, wie Alkohol, Butanol oder Formamid, oder in einem organischen Lösungsmittel allein, wie Butanol oder Ethylglykol, chromiert werden.

Anschliessend wird der 1:1 Chromkomplex vorzugsweise in schwach saurem oder schwach alkalischem Medium bei gewöhnlicher oder erhöhter Temperatur, vorzugsweise im Bereich von 50 bis 100°C, an einen anderen Farbstoff entsprechend der Formel I angelagert. Auch hier kann die Umsetzung in wässriger Lösung, in einem Gemisch aus Wasser und einem Lösungsmittel oder in einem Lösungsmittel allein durchgeführt werden, wobei niedere Alkohole, wie Ethanol, Ketone, wie Ethylmethylketon, Glykole, Etheralkohole, wie Ethyl- oder Butylglykol, und Carbonamide, wie Formamid, Dimethylformamid oder N-Methylpyrrolidon, in Frage kommen. Die Reaktionsteilnehmer werden bevorzugt in stöchiometrischen Mengen eingesetzt; ein Überschuss an metallhaltigem Farbstoff wirkt sich im allgemeinen weniger nachteilig aus als ein Überschuss an metallfreiem Farbstoff.

Die bei der Anlagerung des 1:1-Chromkomplexes an den metallfreien Farbstoff freiwerdende Säure wird durch Zusatz alkalisch wirkender Mittel abgefangen, beispielsweise durch Zusatz von Hydroxiden oder Carbonaten von Alkalimetallen, wie Lithium-, Natrium-, Kaliumhydroxid oder -carbonat, von Ammoniak oder organischen Aminen, wie Mono-, Di-, Triethylamin, Mono-, Di- oder Triethanolamin, oder von Tetraalkylammoniumhydroxiden. Vorzugsweise setzt man die alkalisch wirkenden Mittel so zu, dass die Reaktion bei einem konstanten pH-Wert abläuft.

Am Ende der Reaktion liegen die erfindungsgemässen 1:2-Chrommischkomplexfarbstoffe als Salz der Komplexsäure und der an ihr gebundenen Sulfogruppen mit den oben erwähnten alkalisch wirkenden Mitteln vor, beispielsweise als Alkalisalze bei Verwendung von Alkalihydroxiden oder -carbonaten oder als Ammoniumsalze bei Verwendung von Ammoniak oder Aminen.

Die so hergestellten erfindungsgemässen 1:2-Chromkomplexe können durch Ansäuern, Aussalzen mit Alkalisalzen oder Eindampfen isoliert und mit den üblichen Hilfs- und Stellmitteln zu wasserlöslichen Präparaten verarbeitet werden, sei es zu Pulvern, zu Granulaten mit einer Korngrösse von mindestens 20 µm oder zu kaltwasserlöslichen oder kaltdispergierbaren Zubereitungen.

Aus den Farbstoffen können nach bekannten Methoden, wie sie beispielsweise in der Deutschen Offenlegungsschrift 2 443 483 und der Europäischen Patentveröffentlichung 24 609 beschrieben sind, auch Flüssigpräparationen gewonnen werden.

Die festen, in Wasser löslichen und die flüssigen, mit Wasser mischbaren Präparationen eignen sich zum Färben und Bedrucken der verschiedensten Stoffe, vor allem zum Färben von natürlichen oder synthetischen stickstoffhaltigen Materialien, wie Wolle, Seide, Leder, Polyamid- oder Polyurethanfaser. Man erhält braunstichig gelbe bis rote Färbungen mit guten Licht- und Gebrauchsechtheiten. Die bevorzugte Verwendung der Farbstoffe liegt im Färben von Wolle, Polyamid und insbesondere von Pelzen und Leder, wobei neben Chromleder auch verschieden gegerbte Leder und Veloursleder von Ziege, Rind und Schwein in Frage kommen.

Die flüssigen Farbstoffbereitungen eignen sich besonders zum Sprühfärben von Leder und zum Färben von Leder im Fass oder auf Durchlauf-Mehrzweckmaschinen, wobei sich die erfindungsgemässen Farbstoffe durch ein gutes Durchfärbevermögen,

eine gute Bindung zum Substrat und eine gute Diffusionsechtheit auszeichnen.

1:2-Chromkomplexfarbstoffe, die sich zum Färben der genannten Substrate eignen, sind aus DE-A-2 345 358 und FR-A-2 336 454 bekannt. Sie unterscheiden sich von den neuen Farbstoffen durch die Liganden am Chrom. Die Chromkomplexe der DE-A-2 345 358 weisen anstelle der N-$R_5$-Gruppe der neuen Farbstoffe ein O-Atom auf, während die Chromkomplexe der FR-A-2 336 454 unsymmetrisch sind und sich im Gegensatz zu den neuen Farbstoffen von Phenolen und nicht von Benzoesäuren ableiten.

*Beispiel 1*

Der 1:1-Chromkomplex, der an 0,1 Mol des Farbstoffes aus diazotierter 2-Aminobenzoesäure-5-sulfonsäure und 1-Phenyl-3-methyl-5-pyrazolon 0,1 Mol Chrom gebunden hält, wird in 800 ml Wasser suspendiert und mit 0,1 Mol des Farbstoffes aus diazotierter Anthranilsäure und 1-Phenyl-3-methyl-5--iminopyrazolon versetzt. Das Gemisch wird mit 2 n Natronlauge auf pH 6,5 - 7 gestellt, auf 80°C erwärmt und etwa eine Stunde unter gelegentlicher Zugabe von 2 n Natronlauge bei dieser Temperatur und pH 6,5 - 7 gehalten, bis die Ausgangsstoffe nicht mehr nachweisbar sind. Der entstandene Farbstoff der Formel

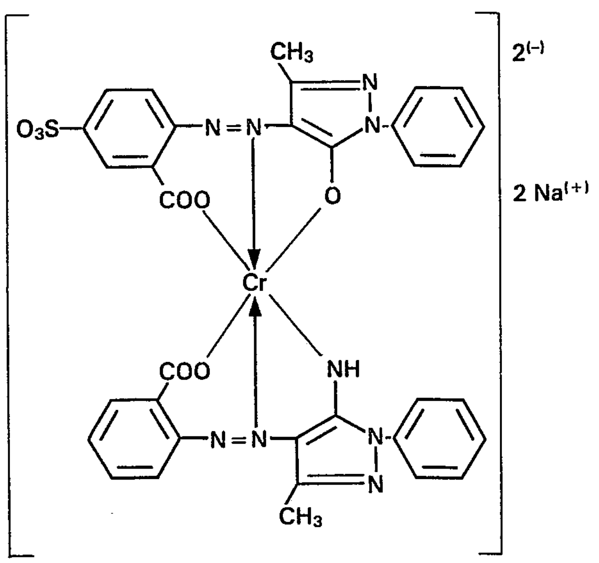

wird durch Eindampfen isoliert. Man erhält ein braunes Pulver, welches Wolle, Polyamid und Leder in braunstichig goldgelben Nuancen von guten Echtheiten färbt.

*Beispiel 2*

Tauscht man die 0,1 Mol des Farbstoffes aus diazotierter Anthranilsäure und 1-Phenyl-3-methyl-5--iminopyrazolon des Beispiels 1 gegen die äquivalente Menge des Farbstoffes aus 2-Amino-5-nitrobenzoesäure aus, so erhält man als Reaktionsprodukt den Chrommischkomplexfarbstoff der Formel

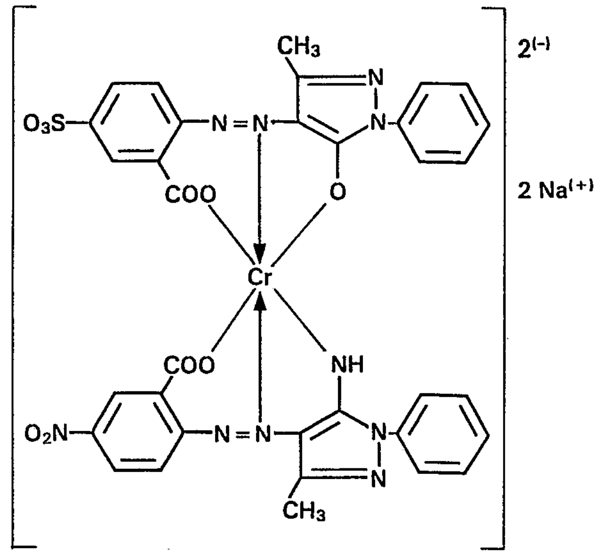

Er ist nach dem Eintrocknen ein braunes Pulver, das auf Wolle, Polyamid und Leder organgebraune Färbungen mit guten Lichtechtheiten liefert.

*Beispiel 3*

450 g Lösung des unter den Bedingungen der Deutschen Offenlegungsschrift 2 443 483 gewonnenen 1:1-Chromkomplexes aus 0,1 Mol Farbstoff aus diazotierten Anthranilsäure und 1-(Phenyl-3'--sulfonamid)-3-methyl-5-pyrazolon und 0,1 Mol $CrCl_3 \cdot 6H_2O$ in Ethylenglykolmonoethylether wird bei 80°C mit 0,1 Mol des Farbstoffes aus diazotierter Anthranilsäure und 1-Phenyl-3-methyl-5-iminopyrazolon und 0,2 Mol $Li_2CO_3$ versetzt. Das Reaktionsgemisch wird etwa eine Stunde bei 80°C gerührt, bis die Ausgangsverbindungen nicht mehr nachweisbar sind. Man erhält eine tiefbraune Lösung des Farbstoffes der folgenden Formel

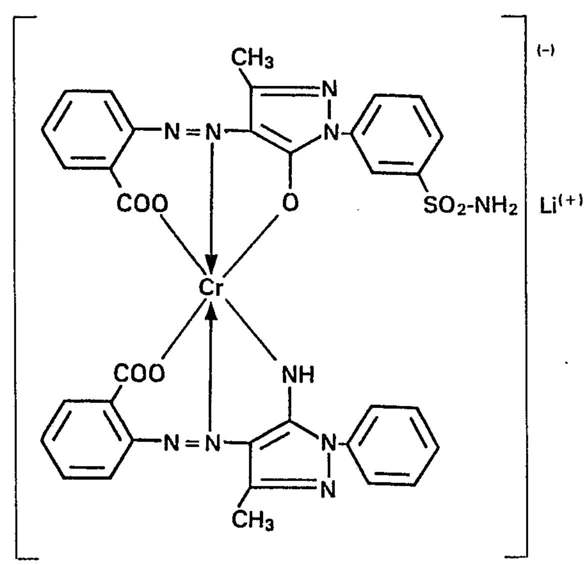

die nach dem Abkühlen auf Raumtemperatur und Abtrennen geringer Salzmengen lange lagerstabil ist und beim Spritzfärben auf Leder lichtechte gelbbraune Färbungen liefert.

*Beispiel 4*

Taucht man den Farbstoff des Beispiels 3 aus diazotierter Anthranilsäure und 1-Phenyl-3-methyl-5-iminopyrazolon gegen 0,1 Mol des Farbstoffes aus diazotierter 2-Amino-5-nitrobenzoesäure und 1-Phenyl-3-methyl-5-iminopyrazolon aus, so erhält man eine lagerstabile Lösung des Farbstoffes der Formel

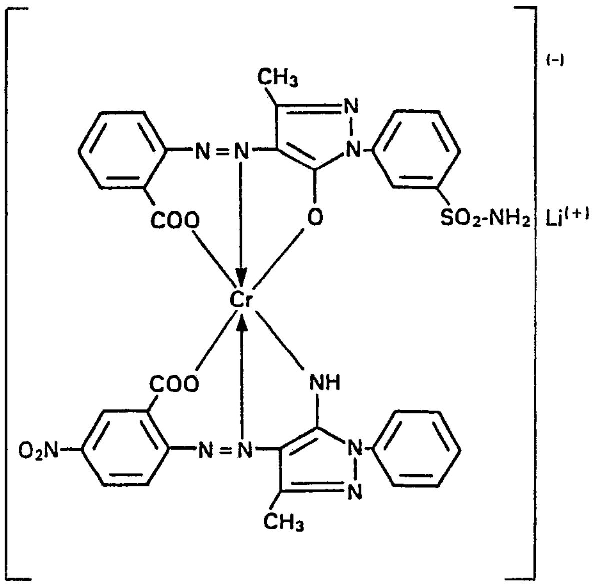

Die dunkelbraune Lösung gibt beim Spritzfärben auf Leder licht- und diffusionsechte orangebraune Färbungen.

*Beispiel 5*

Durch Anlagerung des 1:1 Chromkomplexes des Beispiels 1 an weitere Azofarbstoffe auf Basis von Anthranilsäure und 5-Iminopyrazolonen, gelangt man zu ähnlich wertvollen Farbstoffen der Formel

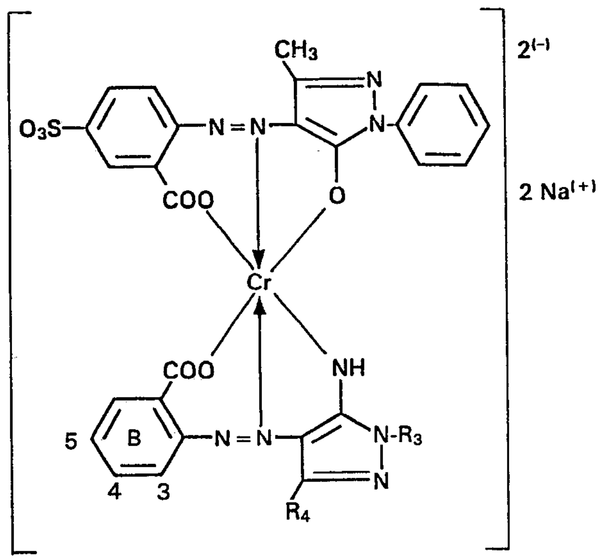

welche die in der Tabelle I angegebenen Farbtöne auf Leder ergeben.

TABELLE I

| Substitution im Ring B | $R_3$ | $R_4$ | Nuance |
|---|---|---|---|
| — | $C_6H_5$ | H | gelbstichig braun |
| — | H | $CH_3$ | gelbstichig braun |
| — | $C_2H_5$ | H | gelbstichig braun |
| — | $C_2H_5$ | $CH_3$ | gelbstichig braun |
| — | $CH_2CH_2$-OH | H | gelbstichig braun |
| — | $CH_2$-$C_6H_5$ | H | gelbstichig braun |
| — | 3-Sulfophenyl | $CH_3$ | gelbstichig braun |
| — | 3-Sulfamoylphenyl | $CH_3$ | gelbstichig braun |
| — | 8-Sulfo-2-naphthyl | $CH_3$ | gelbstichig braun |
| — | 2-Chlorphenyl | $CH_3$ | gelbstichig braun |
| 5-Nitro | $C_6H_5$ | H | rotstichig braun |
| 5-Nitro | H | $CH_3$ | rotstichig braun |
| 5-Nitro | H | $C_6H_5$ | rotstichig braun |
| 5-Nitro | n-Pentyl | H | rotstichig braun |
| 5-Nitro | 2-Chlorphenyl | $CH_3$ | rotstichig braun |
| 5-Nitro | 3-Sulfamoylphenyl | $CH_3$ | rotstichig braun |
| 4-Nitro | H | $CH_3$ | gelbstichig braun |
| 4-Nitro | $CH_2CH_2$-OH | H | gelbstichig braun |
| 4-Nitro | $C_6H_5$ | $CH_3$ | gelbstichig braun |
| 4-Sulfamoyl | H | $CH_3$ | gelbstichig braun |
| 4-Sulfamoyl | n-Butyl | H | gelbstichig braun |
| 5-Sulfamoyl | $C_6H_5$ | $CH_3$ | orangebraun |

TABELLE I (Fortsetzung)

| Substitution im Ring B | $R_3$ | $R_4$ | Nuance |
|---|---|---|---|
| 5-Sulfamoyl | $CH_2$-$C_6H_5$ | H | orangebraun |
| 4-Chlor | $C_6H_5$ | $CH_3$ | gelbstichig braun |
| 4-Chlor | 2-Chlorphenyl | $CH_3$ | gelbstichig braun |
| 5-Chlor | 3-Sulfophenyl | $CH_3$ | orangebraun |
| 5-Chlor | 4-Sulfophenyl | $CH_3$ | orangebraun |
| 4,6-Dichlor | 3-Sulfamoylphenyl | $CH_3$ | gelbstichig braun |
| 4,6-Dichlor | H | $CH_3$ | gelbstichig braun |
| 5-Acetylamino | H | $CH_3$ | orangebraun |
| 5-Acetylamino | 2-Chlorphenyl | $CH_3$ | orangebraun |
| 4-Sulfo | n-Pentyl | H | gelbstichig braun |
| 4-Sulfo | H | $C_6H_5$ | gelbstichig braun |
| 5-Sulfo | $C_6H_5$ | $CH_3$ | gelbstichig braun |
| 5-Sulfo | 4-Methylphenyl | $CH_3$ | gelbstichig braun |
| 4-Carboxyl | H | $CH_3$ | gelbstichig braun |
| 5-Carboxyl | $C_6H_5$ | H | gelbstichig braun |
| 4-Methyl | $C_6H_5$ | $CH_3$ | gelbstichig braun |

Die in den folgenden Beispielen angeführten Farbstoffe können ebenfalls, wie unter den Beispielen 1 bis 4 beschrieben, durch Anlagerung eines 1:1-Chromkomplexes an einen metallfreien Farbstoff hergestellt werden. Sie können als Pulver isoliert werden, wobei sie in der Regel in Form ihrer Natriumsalze vorliegen. Bei der Herstellung einer flüssigen Präparation liegen sie bevorzugt entsprechend der Deutschen Offenlegungsschrift 2 443 483 als Lithiumsalze vor.

Die festen Farbstoffpräparate geben auf Wolle, Polyamid und Leder gedeckte orange- oder gelb- bis rotstichige Braunfärbungen mit guten Gebrauchsechtheiten. Darüber hinaus eignen sich die Flüssigfarbstoffe zum Spritzfärben von Leder und zum Färben von Leder auf Durchlauf-Mehrzweckmaschinen.

*Beispiel 6*

Farbstoffe der allgemeinen Formel

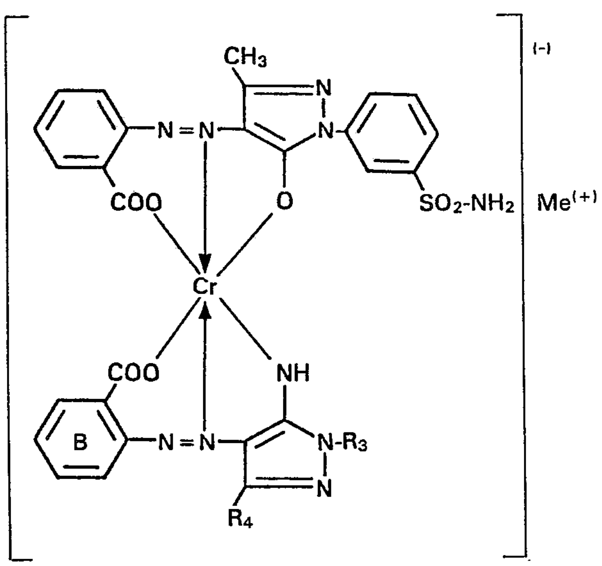

($ME^{(+)} = Na^{(+)}$ ider $Li^{(+)}$)

sind in Analogie zu den vorangegangenen Beispielen erhältlich.

Die weitere Substitution am Ring B, die Bedeutung der Reste $R_3$ und $R_4$ und die Nuancen auf Leder gehen aus Tabelle I hervor.

*Beispiel 7*

Farbstoffe der allgemeinen Formel

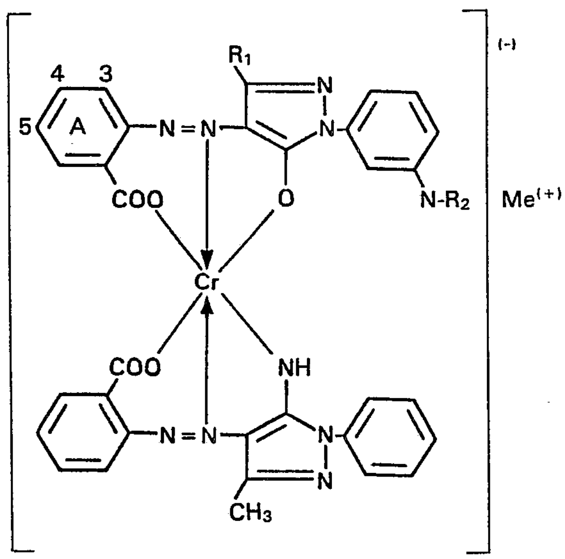

($Me^{(+)} = Na^{(+)}$ oder $Li^{(+)}$)

ergeben auf Leder die in Tabelle II angegebenen Farbtöne.

TABELLE II

| Substitution im Ring A | $R_1$ | $R_2$ | Nuance |
|---|---|---|---|
| — | COOH | 3-Sulfophenyl | gelbstichig braun |
| — | $CO\text{-}NH_2$ | 3-Sulfophenyl | gelbstichig braun |
| — | $C_6H_5$ | 3-Sulfophenyl | gelbstichig braun |
| — | $CH_3$ | 3-Sulfophenyl | gelbstichig braun |
| — | $CH_3$ | 4-Sulfophenyl | gelbstichig braun |
| — | $CH_3$ | 2-Chlor-5-sulfophenyl | gelbstichig braun |
| — | $CH_3$ | 2-Chlor-4-sulfophenyl | gelbstichig braun |
| — | $CH_3$ | 2,5-Dichlor-4-sulfophenyl | gelbstichig braun |
| — | $CH_3$ | 2-Methyl-4-sulfophenyl | gelbstichig braun |
| — | $CH_3$ | 8-Sulfo-2-naphthyl | gelbstichig braun |
| — | $CH_3$ | 7-Sulfo-2-naphthyl | gelbstichig braun |
| — | $CH_3$ | 4,8-Disulfo-2-naphthyl | gelbstichig braun |
| — | $CH_3$ | 6,7-Disulfo-2-naphthyl | gelbstichig braun |
| 5-Sulfo | $C_6H_5$ | H | gelbstichig braun |
| 5-Sulfo | $CH_3$ | H | gelbstichig braun |
| 5-Sulfo | $CH_3$ | $C_2H_5$ | gelbstichig braun |
| 5-Sulfo | $CH_3$ | $CH_2CH_2\text{-}OH$ | gelbstichig braun |
| 5-Sulfo | $CH_3$ | $CH_2CH_2\text{-}CN$ | gelbstichig braun |
| 5-Sulfo | $CH_3$ | 2-Chlorphenyl | gelbstichig braun |
| 5-Sulfo | $CH_3$ | 3,4-Dichlorphenyl | gelbstichig braun |
| 5-Sulfo | $CH_3$ | 2,5-Dichlorphenyl | gelbstichig braun |
| 5-Sulfo | $CH_3$ | 4-Methylphenyl | gelbstichig braun |
| 5-Sulfo | $CH_3$ | 3-Sulfamoylphenyl | gelbstichig braun |
| 5-Sulfo | $CH_3$ | 4-Sulfamoylphenyl | gelbstichig braun |
| 5-Nitro | $CH_3$ | 3-Sulfophenyl | rotstichig braun |
| 5-Nitro | $CH_3$ | 4-Sulfophenyl | rotstichig braun |
| 5-Nitro | $CH_3$ | 2-Chlor-5-sulfophenyl | rotstichig braun |
| 5-Nitro | $CH_3$ | 2-Methyl-4-sulfophenyl | rotstichig braun |
| 4-Nitro | $CH_3$ | 3-Sulfophenyl | orangebraun |
| 4-Nitro | $CH_3$ | 2-Chlor-5-sulfophenyl | orangebraun |
| 4-Sulfamoyl | $CH_3$ | 3-Sulfophenyl | gelbstichig braun |
| 5-Sulfamoyl | $CH_3$ | 4-Sulfophenyl | orangebraun |
| 4-Chlor | $CH_3$ | 3-Sulfophenyl | gelbstichig braun |
| 5-Chlor | $CH_3$ | 3-Sulfophenyl | orangebraun |
| 4,6-Dichlor | $CH_3$ | 3-Sulfophenyl | orangebraun |
| 5-Acetamino | $CH_3$ | 3-Sulfophenyl | orangebraun |
| 4-Methyl | $CH_3$ | 4-Sulfophenyl | gelbstichig braun |
| 4-Sulfo | $CH_3$ | H | gelbstichig braun |
| 4-Sulfo | $C_6H_5$ | H | gelbstichig braun |
| 4-Sulfo | $CH_3$ | $C_6H_5$ | gelbstichig braun |
| 4-Sulfo | $CH_3$ | 2-Chlorphenyl | gelbstichig braun |
| 4-Sulfo | $C_6H_5$ | $C_6H_5$ | gelbstichig braun |
| 4-Carbo | $CH_3$ | H | gelbstichig braun |
| 4-Carbo | $CH_3$ | 3-Sulfamoylphenyl | gelbstichig braun |
| 5-Carbo | $CH_3$ | 3-Sulfophenyl | gelbstichig braun |

*Beispiel 8*

Farbstoffe der allgemeinen Formel

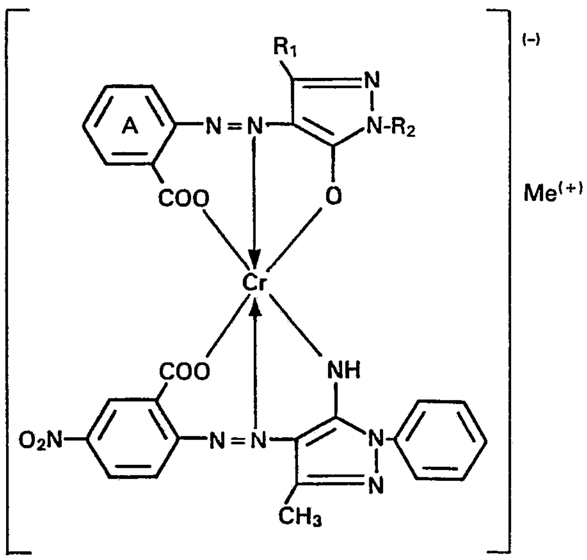

($Me^{(+)}$ = $Na^{(+)}$ oder $Li^{(+)}$)

sind ebenfalls in Analogie zu den vorstehenden Beispielen erhältlich.

Für die restlichen Variablen gelten die Angaben der Tabelle II. Die Nuancen dieser Farbstoffe sind rotstichig braun.

**Patentansprüche**

1. Sulfonsäuregruppen enthaltende 1:2-Chromkomplexfarbstoffe der Formel

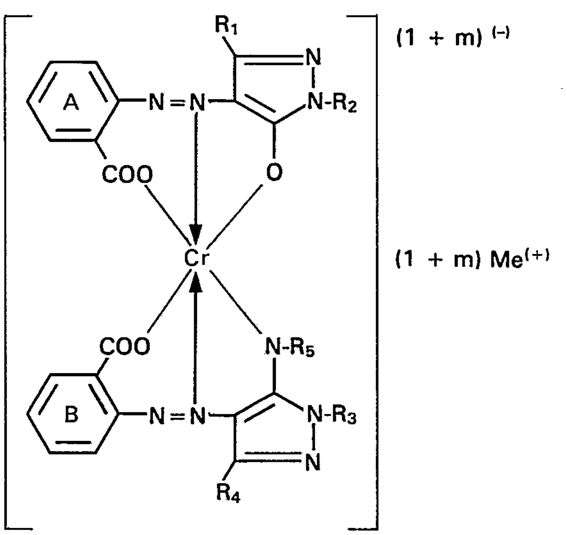

worin unabhängig voneinander

$R_1$ = Alkyl, Aryl, COOH, CO-$NH_2$, CN, CO-O-Alkyl oder CO-O-Aryl,

$R_2$, $R_3$ = H, Alkyl, Aralkyl oder Aryl,

$R_4$ = H, Alkyl oder Aryl,

$R_5$ = H, Alkyl, Aryl oder Arylsulfonyl und

$Me^{(+)}$ = Kation sind,

m = 1-3 ist und der Zahl der Sulfogruppen entspricht,

wobei die Ringe A und B sowie die genannten Alkyl- und Arylgruppen weitere Substituenten tragen können.

2. 1:2-Chromkomplexfarbstoffe gemäss Anspruch 1 der Formel

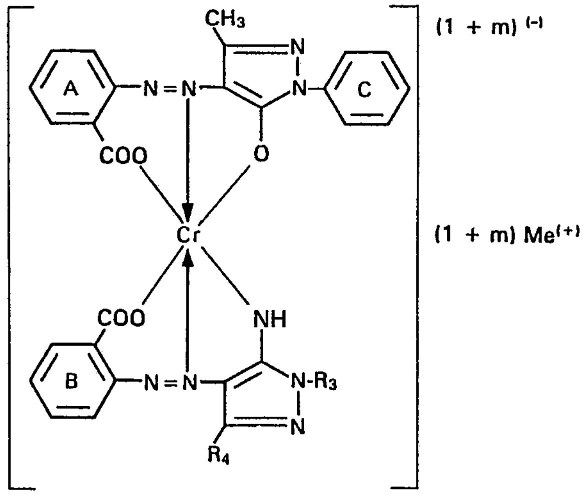

worin die Ringe A und B durch $SO_3H$, $NO_2$, Sulfamoyl oder Cl und der Ring C durch $SO_3H$, Cl, Alkyl, Alkoxy, Alkylsulfonyl, Sulfamoyl, Carbamoyl oder $NO_2$ substituiert sein können und $R_3$, $R_4$, m und $Me^{(+)}$ die in Anspruch 1 genannte Bedeutung haben.

3. 1:2-Chromkomplexfarbstoffe gemäss Anspruch 1 oder 2, dadurch gekennzeichnet, dass die Farbstoffe eine Sulfogruppe enthalten.

4. 1:2-Chromkomplexfarbstoff gemäss Anspruch 1 der Formel

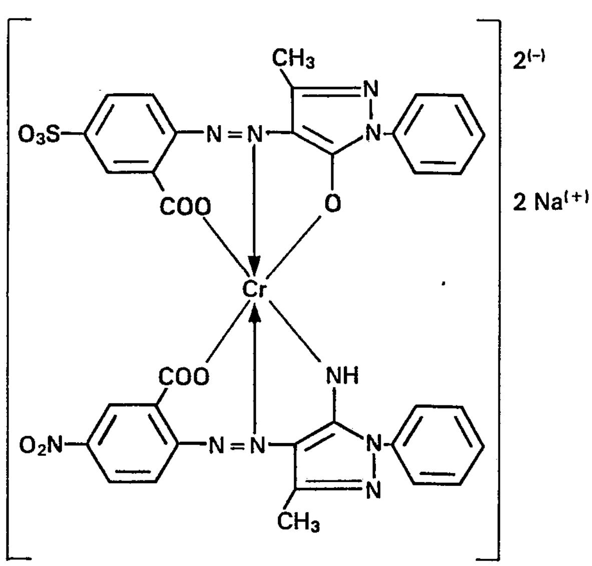

5. 1:2-Chromkomplexfarbstoff gemäss Anspruch 1 der Formel

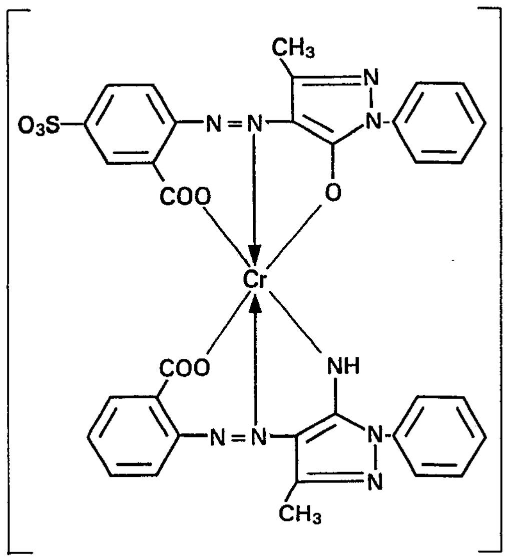

$2^{(-)}$

$2\ Na^{(+)}$

6. Verfahren zur Herstellung von 1:2-Chromkomplexfarbstoffen, dadurch gekennzeichnet, dass man einen metallfreien Azofarbstoff der Formel III oder IV

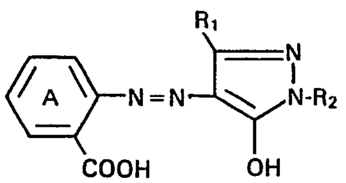

III

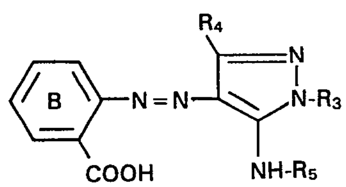

IV

worin die Reste die in Anspruch 1 genannte Bedeutung haben, mit einem chromabgebenden Mittel in den entsprechenden 1:1-Chromkomplex überführt und diesen mit einem Farbstoff der Formel IV bzw. III zu dem entsprechenden unsymmetrischen 1:2-Chrommischkomplex umsetzt.

7. Verfahren zum Färben von stickstoffhaltigen Materialien, dadurch gekennzeichnet, dass man Farbstoffe gemäss Anspruch 1 verwendet.

**Claims**

1. Sulpho-containing 1:2 chromium complex dyestuffs of the formula

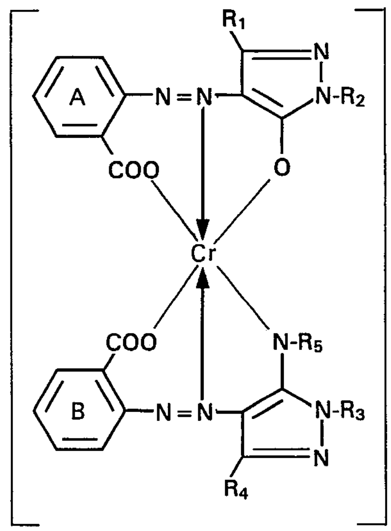

$(1 + m)^{(-)}$

$(1 + m)\ Me^{(+)}$

wherein independently of one another

$R_1$ = alkyl, aryl, COOH, CO-$NH_2$, CN, CO-O-alkyl or CO-O-aryl,

$R_2$, $R_3$ = H, alkyl, aralkyl or aryl,

$R_4$ = H, alkyl or aryl,

$R_5$ = H, alkyl, aryl or arylsulphonyl and

$Me^{(+)}$ = cation,

m = 1-3 and corresponds to the number of sulfo groups, it being possible for the rings A and B and the alkyl and aryl groups mentioned to carry further substituents.

2. 1:2 chromium complex dyestuffs according to Claim 1 of the formula

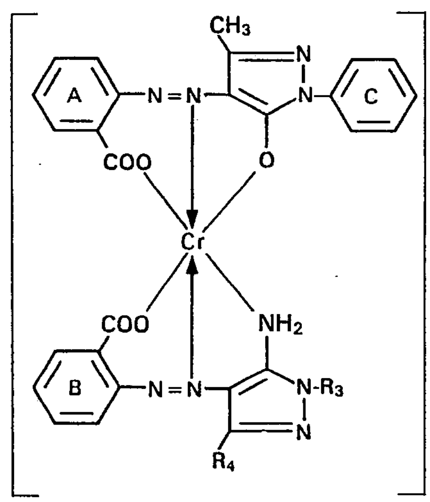

$(1 + m)^{(-)}$

$(1 + m)\ Me^{(+)}$

wherein the rings A and B can be substituted by $SO_3H$, $NO_2$, sulphamoyl or Cl and the ring C by $SO_3H$, Cl, alkyl, alkoxy, alkylsulphonyl, sulphamoyl, carbamoyl or $NO_2$ and $R_3$, $R_4$, m and $Me^{(+)}$ have the meaning mentioned in Claim 1.

3. 1:2 chromium complex dyestuffs according to Claim 1 or 2, characterized in that the dyestuffs contain a sulpho group.

4. 1:2 chromium complex dyestuffs according to Claim 1 of the formula

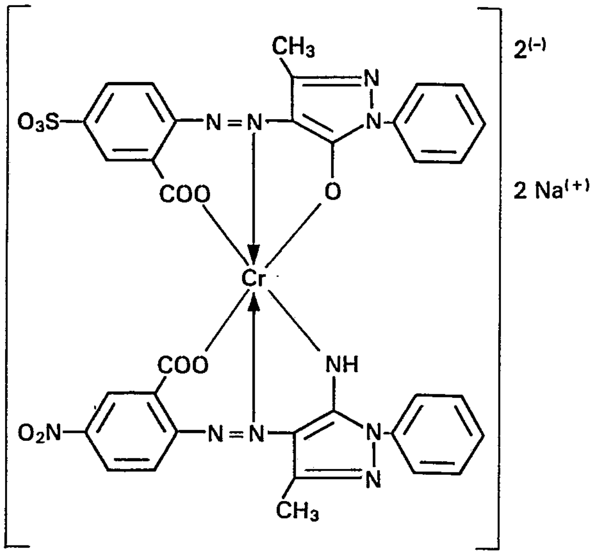

5. 1:2 chromium complex dyestuffs according to Claim 1 of the formula

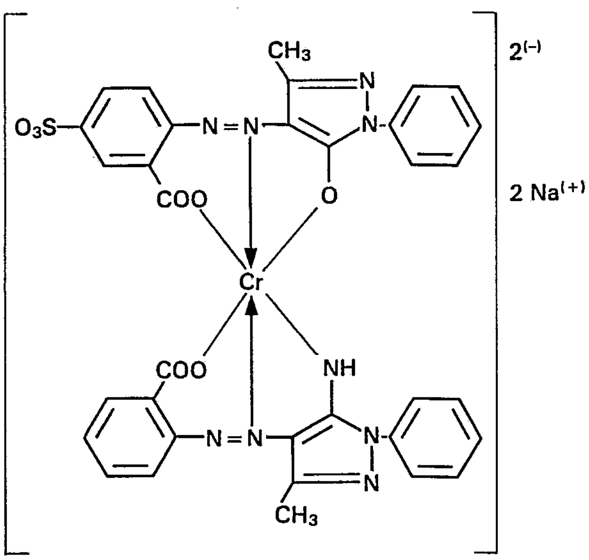

6. Process for preparing 1:2 chromium complex dyestuffs, characterized in that a metal-free azo dyestuff of the formula III or IV

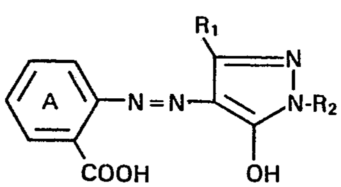

III

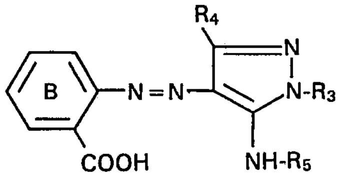

IV

wherein the radical has the meaning mentioned in Claim 1, is converted with a chromium-donating agent in the corresponding 1:1 chromium complex and this 1:1 chromium complex is reacted with a dyestuff of the formula IV or III to give the corresponding asymmetrical 1:2 chromium mixed complex.

7. Process for dyeing nitrogen-containing materials, characterized in that dyestuffs according to Claim 1 are used.

**Revendications**

1. Colorants complexes de chrome 1:2 contenant des groupes acide sulfonique et répondant à la formule

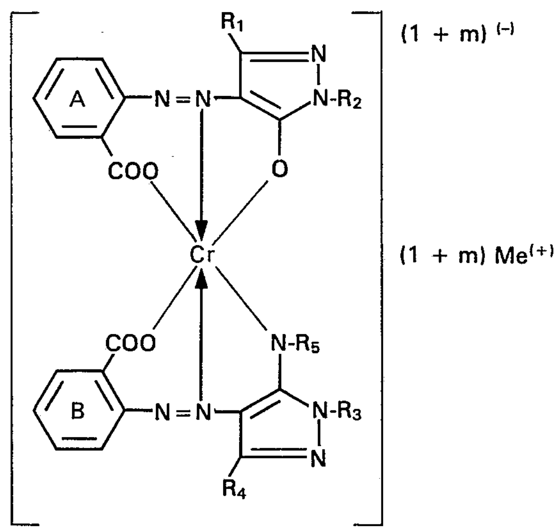

dans laquelle les divers symboles représentent chacun, indépendamment les uns des autres,

$R_1$ = un groupe alkyle, aryle, COOH, CO-$NH_2$, CN, CO-O-alkyle ou CO-O-aryle,

$R_2$, $R_3$ = l'hydrogène, un groupe alkyle, aralkyle ou aryle,

$R_4$ = l'hydrogène, un groupe alkyle ou aryle,

$R_5$ = l'hydrogène, un groupe alkyle, aryle ou arylsulfonyle, et

$Me^{(+)}$ = un cation,

m = un nombre allant de 1 à 3 et correspondant au nombre des groupes sulfo, les cycles A et B, ainsi que les groupes alkyle et aryle mentionnés, pouvant porter d'autres substituants.

2. Colorants complexes de chrome 1:2 selon la revendication 1, répondant à la formule

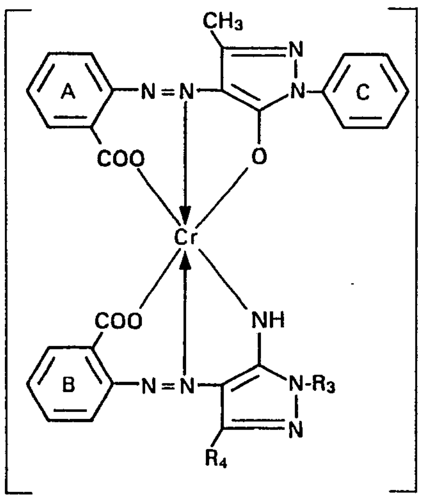

(1 + m) $^{(-)}$

(1 + m) $Me^{(+)}$

dans laquelle les cycles A et B peuvent être substitués par $SO_3H$, $NO_2$, des groupes sulfamoyle ou Cl et le cycle C par $SO_3H$, Cl, des groupes alkyle, alcoxy, alkylsulfonyle, sulfamoyle, carbamoyle ou $NO_2$ et $R_3$, $R_4$, m et $Me^{(+)}$ ont les significations indiquées dans la revendication 1.

3. Colorants complexes de chrome 1:2 selon la revendication 1 ou 2, caractérisés en ce qu'il contiennent un groupe sulfo.

4. Colorant complexe de chrome 1:2 selon la revendication 1, répondant à la formule

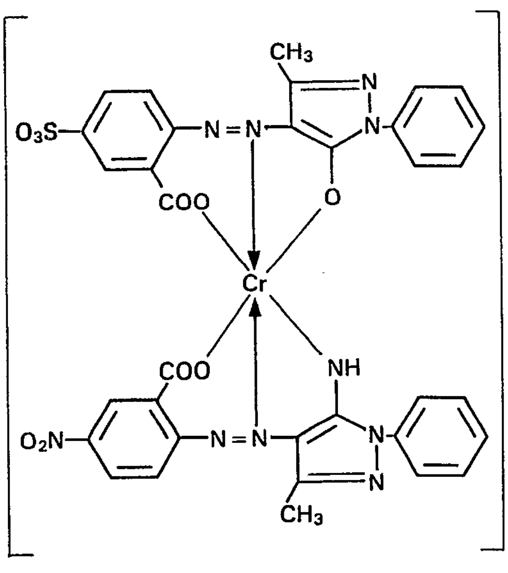

$2^{(-)}$

2 $Na^{(+)}$

5. Colorant complexe de chrome 1:2 selon la revendication 1, répondant à la formule

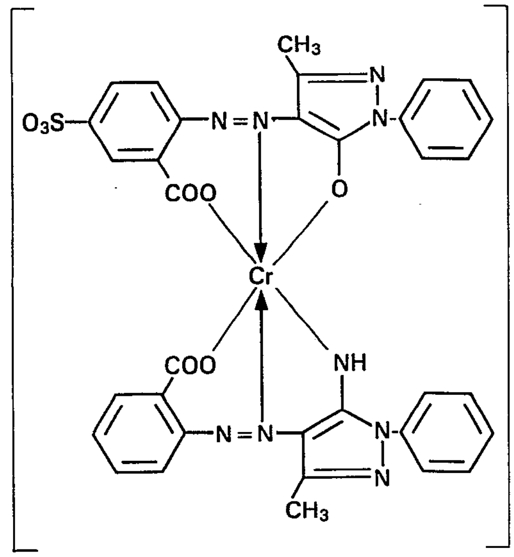

$2^{(-)}$

2 $Na^{(+)}$

6. Procédé de préparation de colorants complexes de chrome 1:2, caractérisé en ce que l'on convertit un colorant azoïque exempt de métal de formule III ou IV

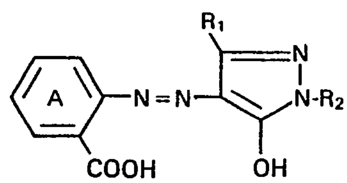

III

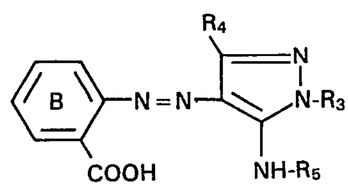

IV

dans laquelle les divers symboles ont les significations indiquées dans la revendication 1, à l'aide d'un réactif cédant du chrome, en le complexe de chrome 1:1 correspondant qu'on convertit ensuite à l'aide d'un colorant de formule respective IV ou III en le complexe mélangé de chrome 1:2 asymétrique correspondant.

7. Procédé pour teindre les matières azotées, caractérisé en ce que l'on utilise des colorants selon la revendication 1.